# EUROPEAN PATENT APPLICATION

(11) **EP 1 477 960 A2**
(43) Date of publication of application: **17.11.2004**
(21) Application number: 04252367.0
(22) Date of filing: 22.04.2004
(51) Int. Cl.: G09G 3/30

(54) **Electroluminescent display device driver circuit**

(30) Priority: 22.04.2003 GB 0309098
(71) Applicant: Elumin8 Systems, Ferndown Dorset BH21 7SH (GB); Diatron AB, 233 51 Svedala (SE)
(72) Inventor: Hanson, Anders c/o Diatron AB, 23351 - Svedala (SE)
(74) Representative: Suèr, Steven Johannes

(57) **Abstract**

An electroluminescent display device driver circuit is provided comprising terminals for connection to an electroluminescent display device (8); an adjustable DC power supply (6); and a charging circuit connected between the power supply (6) and the connection terminals. The charging circuit is capable of alternately charging the electroluminescent display device (8) to a voltage level according to the power supply (6) and discharging the electroluminescent display device (8) whilst returning discharging energy to the power supply (6).

## Description

The present invention relates to an electroluminescent display device driver circuit.

Electroluminescent (EL) lamps or display devices are well known. Typically, they comprise a luminescent phosphor layer which will emit light when a large enough electric field is applied across it. Due to the high field level, current limiting insulators are provided on either side of the phosphor layer to form a reliable device structure. Finally, electrodes are provided on the top and bottom of the insulators to provide a basic capacitive device. At least one of the electrodes is transparent to permit viewing of emitted light. It will be appreciated that the structure of EL display devices can vary although they have in common the overall capacitive structure. As is well know, such EL display devices can have a thin film structure facilitating a wide variety of applications. The detailed structure of the known display devices is well known to those skilled in the art and for the purpose of simplifying the present description, they will not be described in further detail.

As is known, an EL display device driver circuit should apply a sufficiently high AC voltage across the electrodes thereof to cause the device or lamp to emit light. To emit light continuously the device must be charged and discharged at low frequency during successive charge and discharge cycles. Thus, the drive signal to be provided from the driver circuit should be a high voltage, low frequency signal.

Whilst such thin film EL display devices are very useful, there is a need to be able to apply them simply in many situations. For example, different advertising displays will have different EL display panels which must be driven in different ways according to the advert in question. In addition, there is a need to be able to drive such panels in an energy efficient manner and in a manner which can easily accommodate the natural diminution in light emitted over time, that is to say, the ageing of the display panels.

It is an object of the present invention to provide an EL display device driver circuit which is energy efficient and is easily adaptable to driving EL display devices used in differing situations.

According to the present invention there is provided an electroluminescent display device driver circuit comprising:-
terminals for connection to an electroluminescent display device;
an adjustable DC power supply;
a charging circuit connected between the power supply and the connection terminals and capable of alternately charging the electroluminescent display device to a voltage level according to the power supply and discharging the electroluminescent display device whilst returning discharging energy to the power supply.

In one embodiment, the alternate charging and discharging of the electroluminescent display device is substantially sinusoidal. This leads to enhanced efficiency in the driver circuit since the transition between charging and discharging is smooth. It also reduces noise and humming.

In one embodiment, the circuit further comprises a control means;
wherein the charging circuit includes solid state switching means having control terminals connected to the control means. Consequently, an easily controllable driver circuit is provided.

In a particular embodiment, the charging circuit comprises first and second circuit arms each connected between the power supply and the connection terminals and each including respective said solid state switching means.

It is preferred that the control means opens and closes the solid state switching means at a particular frequency to control the rate of said charging and discharging by the charging circuit.

Conveniently, said particular frequency is adjustable to vary the rate of alternate charging and discharging of the electroluminescent display device.

In another embodiment, the particular frequency is applied as a square wave and the pulse width is adjustable to control the power applied to the electroluminescent display device.

Preferably, the adjustable DC power supply comprises a capacitor connectable to a DC power source.

An example of the present invention will now be described with reference to the accompanying drawings, in which:-
Figure 1 illustrates an electroluminescent display device driver circuit embodying the present invention; and
Figure 2 illustrates a timing circuit for the driver circuit of figure 1.

A DC power source 2 has input terminals 1 connected to a mains source. The power source 2 supplies a voltage +V on an output line 4 connected to a point 5. Another output line 3 provides a voltage -V to various locations. A voltage adjustment line 10 is also provided for the power source 2.

The point 5 is connected to one side of a capacitor 6 which has its other side connected to the -V output line 3. This capacitor functions as a bulk capacitor in the circuit and is in effect an adjustable DC power supply. In one case, the capacitor could be replaced by a battery and a capacitor. The electrodes of an electroluminescent display device or lamp 8 are connected via respective arms, generally identified by the reference numerals 20 and 21, to the point 5.

The arm 20 has one side of a capacitor C1 connected to the electrode of the lamp 8 and the other side of the capacitor C1 connected to the -V output line 3. One side of an inductor L1 is connected to the electrode of the lamp 8 whilst the other side is connected to a point 9. A diode D1 has its anode connected to the point 9 and its cathode connected to the point 5. A diode D2 has its cathode connected to the point 9 and its cathode connected to the -V output line 3. A MOSFET switch A is connected across the diode D1 and a MOSFET switch C is connected across the diode D2.

In a similar manner the arm 21 has one side of a capacitor C2 connected to the other electrode of the lamp 8 and the other side of the capacitor C2 connected to the -V output line 3. One side of an inductor L2 is connected to the electrode of the lamp 8 whilst the other side is connected to point 7. A diode D3 has its anode connected to the point 7 and its cathode connected to the point 5. A diode D4 has its cathode connected to the point 7 and its cathode connected to the -V output line 3. A MOSFET switch B is connected across the diode D3 and a MOSFET switch D is connected across the diode D4.

A logic circuit 22 has four outputs 22A, 22B, 22C and 22D connected (not shown) to the respective control terminals of the MOSFET switches A, B, C and D.

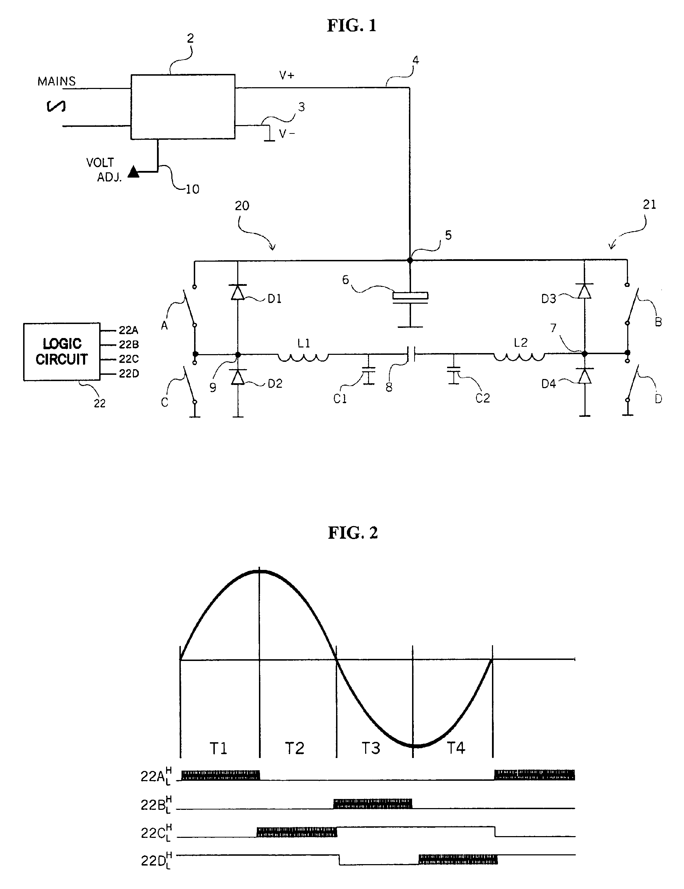

Figure 2 shows a timing circuit for the driver circuit of figure 1.

In a first time interval, T1, the logic circuit 22 operates such that the outputs 22B and 22C are LOW to cause the respective switches B and C to be open and the output 22D is HIGH to cause switch D to be closed. Meanwhile, the output 22A is changed between HIGH and LOW to open and close the switch A at a regular frequency of 30 to 40 kHz. As a result, there is an incremental charging of the lamp 8 with positive charge current provided via the inductor L1.

In a second time interval, T2, the logic circuit 22 operates such that the outputs 22A and 22B are LOW to cause the respective switches A and B to be open whilst the output 22D remains HIGH to cause switch D to be closed. Meanwhile, the output 22C is changed between HIGH and LOW to open and close the switch C at the aforesaid regular frequency. As a result, there is an incremental discharging of the lamp 8 with the energy from inductor L1 passing through diode D1 to charge the bulk capacitor 6. Thus, in this discharge cycle, energy is recycled to the next charge cycle thereby increasing efficiency.

In a third time interval, T3, the logic circuit 22 operates such that the outputs 22A and 22D are LOW to cause the respective switches A and D to be open and the output 22C is HIGH to cause switch C to be closed. Meanwhile, the output 22B is changed between HIGH and LOW to open and close the switch B at the aforesaid regular frequency. As a result, there is an incremental charging of the lamp 8 with positive charge current provided via the inductor L2.

In a fourth time interval, T4, the logic circuit 22 operates such that the outputs 22A and 22B are LOW to cause the respective switches A and B to be open whilst the output 22C remains HIGH to cause switch C to be closed. Meanwhile, the output 22D is changed between HIGH and LOW to open and close the switch D at the aforesaid regular frequency. As a result, there is an incremental discharging of the lamp 8 with the energy from inductor L2 passing through diode D3 to charge the bulk capacitor 6. Thus, in this discharge cycle, energy is recycled to the next charge cycle thereby increasing efficiency.

Accordingly, the lamp 8 is charged sinusoidally up to a first voltage and sinusoidally discharged to a second voltage level. This reduces noise and humming from harmonics. In addition, it is unnecessary to use bulky and heavy transformers. Moreover, a high energy efficiency is provided for higher powers, e.g. above 10 watts. It will be appreciated that the output is load independent. In addition, by using square wave signals 22A - 22D, pulse width modulation techniques can be employed to easily vary the power applied to the lamp 8. Consequently, it is a simple matter to compensate for ageing characteristics of the lamp 8 according to a light sensor. Since the lighting characteristics of the lamp 8 are dictated by the logic signals 22A-22D, it is straightforward to control the ON time of the lamp 8. Indeed, the pattern of logic signals can be pre-programmed and can be stored on an exchangeable digital memory, e.g. a smart card or can be downloaded to the driver circuit by means of a telecommunications link, either hardwired or wireless.

The voltages used can be in the range of 100-150 volts with the sinusoidal frequency range being 300-600 Hz. With the present invention, high current can be applied to the electroluminescent display device, but only low power is used.

The present invention is capable of considerable modification, the detailed embodiments of which will be readily apparent to those skilled in the art.

## Claims

1. An electroluminescent display device driver circuit comprising:-
terminals for connection to an electroluminescent display device;
an adjustable DC power supply;
a charging circuit connected between the power supply and the connection terminals and capable of alternately charging the electroluminescent display device to a voltage level according to the power supply and discharging the electroluminescent display device whilst returning discharging energy to the power supply.

2. A circuit according to claim 1 wherein the alternate charging and discharging of the electroluminescent display device is substantially sinusoidal.

3. A circuit according to claim 1 or 2 further comprising a control means;
wherein the charging circuit includes solid state switching means having control terminals connected to the control means.

4. A circuit according to claim 3 wherein the charging circuit comprises first and second circuit arms each connected between the power supply and the connection terminals and each including respective said solid state switching means.

5. A circuit according to claim 3 or 4 wherein the control means opens and closes the solid state switching means at a particular frequency to control the rate of said charging and discharging by the charging circuit.

6. A circuit according to claim 5 wherein said particular frequency is adjustable to vary the rate of alternate charging and discharging of the electroluminescent display device.

7. A circuit according to claim 5 or 6 wherein the particular frequency is applied as a square wave and the pulse width is adjustable to control the power applied to the electroluminescent display device.

8. A circuit according to any one of claims 3 to 7 wherein the control means includes memory means.

9. A circuit according to any preceding claim wherein the adjustable DC power supply comprises a capacitor connectable to a DC power source.
